# FASCICULE DE BREVET EUROPEEN

(11) **EP 3 126 657 B1**
(45) Date de publication et mention de la délivrance du brevet: **03.10.2018**
(21) Numéro de dépôt: 15719790.6
(22) Date de dépôt: 02.04.2015
(51) Int. Cl.: F02K 1/70, F02K 1/76, F02K 1/60

(54) **SYSTÈME DE VERROUILLAGE D'UN INVERSEUR DE POUSSÉE À PORTES, COMPORTANT DES VERROUS POUR UNE POSITION D'OUVERTURE INTERMÉDIAIRE**
SYSTEM ZUM VERRIEGELN EINES SCHUBUMKEHRERS MIT KLAPPEN, EINSCHLIESSLICH VERRIEGELUNGEN FÜR EINE ÖFFNUNGSZWISCHENPOSITION
SYSTEM FOR LOCKING A THRUST REVERSER WITH FLAPS, COMPRISING LOCKS FOR AN INTERMEDIATE OPENING POSITION

(30) Priorité: 02.04.2014 FR 1452930
(43) Date de publication de la demande: 08.02.2017
(73) Titulaire: Safran Nacelles, 76700 Gonfreville-l'Orcher (FR)
(72) Inventeur: HUE, Corentin, 76600 Le Havre (FR); DENIS, Rodolphe, 76600 Le Havre (FR); GUILLOIS, Denis, 91470 Limours (FR); TISSOT, Sarah, 78390 Bois d'Arcy (FR)
(74) Mandataire: Gaillarde, Frédéric F. Ch.
(86) Numéro de dépôt international: PCT/FR2015/050863
(87) Numéro de publication internationale: WO 2015/150707

(56) Documents cités:
- WO-A1-03/100241
- WO-A1-2011/073558
- FR-A- 926 359
- GB-A- 930 781

## Description

La présente invention concerne un système de verrouillage d'un inverseur de poussée à portes pour une nacelle de turboréacteur, ainsi qu'une nacelle de turboréacteur comportant un tel système de verrouillage.

Les ensembles de motorisation pour les aéronefs comportent généralement une nacelle formant une enveloppe extérieure globalement de révolution, recevant à l'intérieur un turboréacteur disposé suivant l'axe longitudinal de cette nacelle. Le turboréacteur reçoit de l'air frais venant du côté amont ou avant, et rejette du côté aval ou arrière les gaz chauds issus de la combustion du carburant, qui donnent une certaine poussée.

Les turboréacteurs à double flux présentent autour de ce turboréacteur des aubes de soufflante générant un flux secondaire important d'air froid le long d'une veine annulaire passant entre le moteur et la nacelle, qui apporte la majeure partie de la poussée sur les avions de transport civil.

Un type d'inverseur de poussé connu, présenté notamment par le document WO-A1-2008/142243, comporte un inverseur de poussée équipé de portes disposées à l'arrière de la nacelle, qui pivotent chacune suivant un axe transversal pour se déployer afin de fermer partiellement le flux d'air vers l'arrière. Dans leurs positions ouvertes ou déployées, les portes dévient le flux d'air radialement vers l'extérieur en passant par des ouvertures transversales de contre-poussée dégagées par ce déploiement, et orientent ce flux vers l'avant.

L'ouverture de l'inverseur est commandée par des actionneurs qui peuvent être électriques ou hydrauliques.

Des inverseurs de poussée sont également connus par les documents GB 930 781 A et WO 03/100241 A1.

Généralement le déploiement complet des portes ne s'effectue que pour les plus faibles vitesses de l'aéronef, quand il roule sur la piste d'atterrissage. Une ouverture de ces portes en vol peut être envisagée suivant un angle limité, afin que les contraintes mécaniques liées aux efforts aérodynamiques dus à la vitesse ne soient pas trop fortes.

On doit alors prévoir dans ce cas des actionneurs de portes qui maintiennent une position intermédiaire de ces portes, entre les deux fins de course de la position fermée et de la position entièrement déployée. Les actionneurs sont alors soumis à une contrainte permanente pendant un temps long, ce qui entraîne un travail en fatigue nécessitant un dimensionnement particulier pour obtenir la fiabilité et la sécurité nécessaire.

De plus cette solution doit être sécurisée de différentes manières pour des pannes simples.

La présente invention a notamment pour but d'éviter ces inconvénients de la technique antérieure.

Selon l'invention, on met en oeuvre un inverseur de poussée conformément à la revendication 1.

Elle propose à cet effet un système de verrouillage de position des portes d'un inverseur de poussée d'une nacelle de turboréacteur, ces portes commandées par des actionneurs, basculant chacune autour d'un pivot transversal afin de fermer en partie le flux d'air pour le diriger vers l'avant, caractérisé en ce qu'il comporte des verrous prévus pour verrouiller une position d'ouverture intermédiaire des portes, entre la position fermée et la position entièrement déployée.

Un avantage de ce système de verrouillage est que l'actionnement des verrous peut de manière simple, économique et efficace, bloquer une position intermédiaire d'ouverture des portes qui correspond notamment à l'ouverture maximum admissible en vol, sans solliciter les actionneurs des portes pour maintenir cette position, qui ne travaillent alors pas en fatigue.

Le système de verrouillage selon l'invention peut comporter de plus une ou plusieurs des caractéristiques suivantes, qui peuvent être combinées entre elles.

Avantageusement, le système de verrouillage comporte des cames liées en rotation aux pivots des portes, sur lesquelles agissent les verrous. Ce système à came est simple et efficace.

En particulier, chaque came peut comporter une partie extérieure en forme de spirale, qui se termine par un décrochement dans lequel vient s'ajuster le verrou pour assurer le blocage de cette came.

Avantageusement, les verrous sont guidés axialement pour coulisser et venir dans la position verrouillée. Le guidage axial permet de résister à des efforts latéraux importants.

Dans ce cas, le système de verrouillage peut comporter deux verrous montés en opposition, qui sont commandés simultanément pour s'écarter l'un de l'autre, et verrouiller chacun une des portes de l'inverseur. L'effort de l'actionneur des verrous peut ainsi s'équilibrer entre ces deux verrous.

Avantageusement, le système de verrouillage comporte des moyens qui en l'absence d'effort de l'actionneur des verrous, maintiennent bloquée la position verrouillée de ces verrous pour une force axiale appliquée dessus. On assure ainsi facilement la sécurité du verrouillage.

En particulier les moyens peuvent comporter deux biellettes commandant chacune un des verrous, reliées entre elles par un axe transversal, pour la position d'ouverture intermédiaire ces biellettes venant dans une position sensiblement alignée suivant l'axe de ces verrous.

Avantageusement, le système de verrouillage comporte des ressorts appliquant une pression qui tend à mettre les verrous dans la position de verrouillage de la position d'ouverture intermédiaire des portes. La position est ainsi maintenue en l'absence de commande.

Dans ce cas, chaque biellette peut recevoir l'appui permanent d'un ressort.

L'invention a aussi pour objet une nacelle de turboréacteur disposant d'un inverseur de poussée à portes équipé d'un système de verrouillage comprenant l'une quelconque des caractéristiques précédentes.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est une demi-vue d'un inverseur de poussée selon l'invention, qui est coupé dans un plan axial de symétrie entre les deux portes ;
- la figure 2 est une demi-vue de côté de cet inverseur ;
- la figure 3 est une vue de côté présentant les extrémités des pivots des deux portes, la position intermédiaire des portes n'étant pas verrouillée ; et
- la figure 4 est la même vue, la position intermédiaire des portes étant verrouillée.

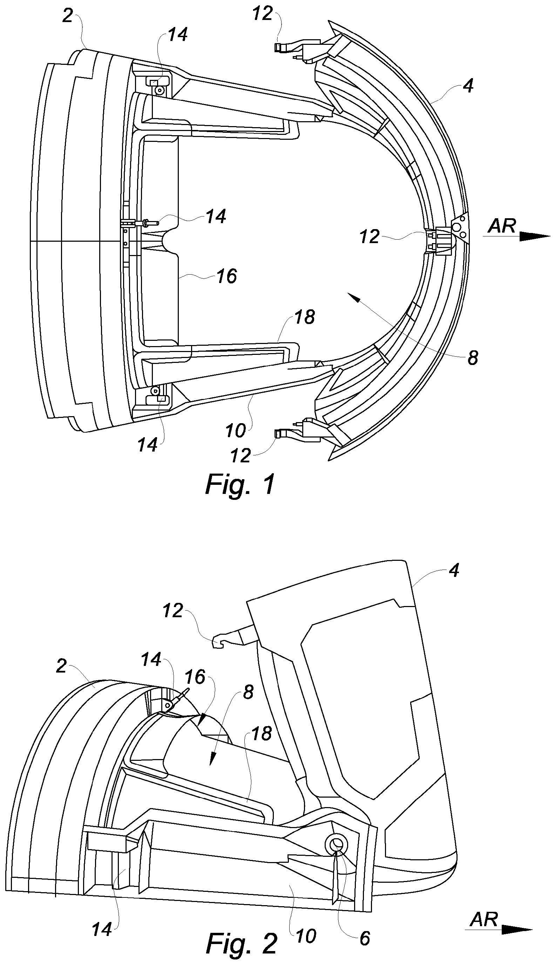

Les figures 1 et 2 présentent une structure circulaire fixe 2 se trouvant à l'arrière d'une nacelle recevant un turboréacteur disposé suivant un axe principal, qui rejette un flux de gaz vers l'arrière indiqué par la flèche « AR ». Les demi-vues de ces figures sont coupées par le plan de symétrie entre les deux portes 4, qui dans l'aéronef peut disposer d'une inclinaison quelconque.

L'ensemble de l'inverseur de poussée comporte un plan axial de symétrie qui est perpendiculaire au plan de symétrie entre les deux portes 4.

Chaque côté de la structure fixe 2 comporte un bras latéral 10 s'étendant vers l'arrière, recevant dans chaque angle de sa partie arrière un pivot transversal 6 d'une porte formant un capot 4.

Chaque porte 4 peut basculer autour de ses deux pivots transversaux 6 en soulevant la partie avant, comme présenté figures 1 et 2, pour d'une part sensiblement fermer le passage vers l'arrière des gaz venant du turboréacteur et de la veine annulaire l'entourant, et d'autre part dévier ce flux vers l'avant en passant par les ouvertures transversales de contre-poussée 8 ouvertes par ce basculement, pour le renvoyer partiellement vers l'avant.

L'avant de chaque capot 4 comporte au centre et de chaque côté un crochet 12 venant se fixer dans un verrou 14 lié à la structure fixe 2, quand ce capot est fermé.

Un bord de déviation 16 prolonge la partie arrière de la structure fixe 2, en s'avançant dans l'ouverture de contre-poussée 8. La structure fixe 2 reçoit de chaque côté de l'ouverture de contre-poussée 8, un flanc 18 disposé dans la continuation du bord de déviation 16.

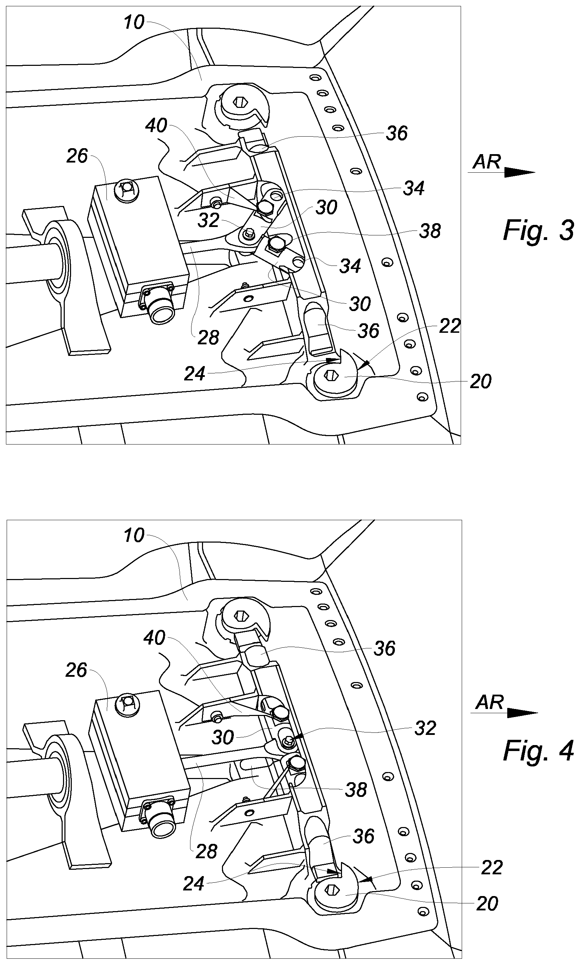

La figure 3 présente l'extrémité de chaque pivot d'une porte de l'inverseur de poussée, maintenue dans le bras latéral 10, qui reçoit une came 20 disposée dans un plan perpendiculaire à l'axe de ce pivot. La came comporte un profil extérieur formant une spirale de rayon croissant 22, qui se termine par un décrochement vers l'intérieur 24.

Le bras latéral 10 supporte un actionneur électrique 26 comprenant une bielle de commande 28 disposée parallèlement à l'axe de la nacelle, dans le plan horizontal de symétrie entre les deux portes 4. La bielle de commande 28 coulisse axialement sous l'effet de son actionneur 26.

Un axe transversal 32 guidé dans un perçage transversal de l'extrémité arrière de la bielle de commande 28, est engagé de chaque côté de cette bielle dans un perçage de l'extrémité avant d'une biellette 30. Les deux biellettes 30 sont ainsi articulées autour de l'extrémité arrière de la bielle 28, dans un plan perpendiculaire aux pivots des portes de l'inverseur de poussée.

L'extrémité inférieure de l'axe transversal 32 circule dans une rainure longitudinale 38 creusée dans le bras latéral 10.

L'extrémité arrière de chaque biellette 30 est liée par un axe transversal 34 à l'extrémité appelée intérieure d'un verrou coulissant 36. Les deux verrous 36 alignés entre eux, sont guidés de manière coulissante dans un perçage du bras latéral 10, suivant un axe passant par les deux pivots des portes.

Chaque biellette 30 reçoit l'appui permanent d'une lame de ressort 40 qui est fixée sur une nervure du bras latéral 10, afin d'appliquer un effort tendant à reculer ces biellettes pour écarter les verrous 36 vers l'extérieur. Les ressorts 40 aident au recul de la bielle de commande 28 lors du mouvement de l'actionneur 26.

Quand la bielle de commande 28 est dans sa position avant, comme présenté figure 3, les deux biellettes 30 forme un angle d'environ 45° avec cette bielle. Les deux axes transversaux 34 des extrémités arrière des biellettes 30 sont rapprochés, les deux verrous 36 sont alors tirés vers l'intérieur.

L'extrémité extérieure de chaque verrou 36 est alors éloignée de la came 20, elle ne peut pas s'engager dans le décrochement 24 de cette came. La came 20 peut tourner librement dans un sens ou dans l'autre, sans être arrêtée par le verrou 26.

Quand la bielle de commande 28 est dans sa position arrière, comme présenté figure 4, les deux biellettes 30 sont sensiblement alignées, formant un angle droit avec cette bielle. Les deux axes transversaux 34 des extrémités arrière des biellettes 30 sont éloignés, les deux verrous 36 sont alors poussés vers l'extérieur dans une position verrouillée.

L'extrémité extérieure de chaque verrou 36 est dans ce cas engagée dans le décrochement 24 de la came 20. La came 20 est alors bloquée dans une position angulaire correspondant à une ouverture intermédiaire de la porte, avec un sens de rotation possible permettant seulement une fermeture de cette porte.

L'ouverture intermédiaire de la porte correspond à la position d'ouverture maximum admissible pour l'aéronef en vol, de manière à ne pas générer de contraintes trop importantes dans l'inverseur de poussée.

Grâce au profil extérieur en spirale 22 de la came 20, on peut avoir quand les portes de l'inverseur de poussée sont fermées une fermeture des verrous 36 par l'actionneur 26, qui viennent en appui sur ce profil en spirale. Les verrous 36 glissent alors ensuite sur le profil en spirale 22 pendant l'ouverture des portes, pour venir bloquer la position intermédiaire quand le décrochement 24 vient en appui sur ces verrous, et empêcher une ouverture plus grande.

On notera que la position verrouillée vers l'extérieur des verrous 36 est complètement bloquée par la position alignée des biellettes 30, maintenue par l'appui vers l'arrière des ressorts 40. Quelle que soit la force axiale appliquée vers l'intérieur sur les verrous 36, les biellettes 30 ne peuvent plus s'incliner, ce qui évite une rétractation de ces verrous.

Avantageusement des capteurs de position permettent de contrôler la position des verrous 36 ou de leurs éléments de commande, afin de sécuriser ce système de verrouillage.

Dans le cas d'une perte de contrôle des actionneurs de l'inverseur de poussée, les ressorts 40 agissent alors pour reculer les biellettes 30 et sortir les verrous 36 vers l'extérieur. Les portes de l'inverseur ne peuvent alors pas dépasser la position intermédiaire, ce qui assure la sécurité pendant les vols.

Pour une ouverture complète de l'inverseur de poussée, qui peut se faire lorsque l'aéronef touche la piste, il faut alors commander une rétractation des verrous 36. En particulier on peut détecter ce contact sur la piste par une charge sur les roues de l'aéronef, afin de sécuriser cette ouverture complète.

On assure ainsi facilement la sécurité des verrous dans la position verrouillée pour un inverseur de poussée qui peut être ouvert en vol, l'actionneur 26 ne consommant pas d'énergie et ne subissant pas de contrainte, ce qui permet de lui assurer facilement une bonne fiabilité.

Par ailleurs dans le cas de deux portes d'inverseur qui sont reliées entre elles dans leurs mouvements de déploiement, chaque verrou 36 bloquant une des portes est avantageusement dimensionné pour maintenir l'autre porte de manière à assurer une sécurité en cas de défaillance d'un des verrous.

## Revendications

1. Inverseur de poussée pour une nacelle de turboréacteur comprenant des portes (4) commandées par des actionneurs, basculant chacune autour d'un pivot transversal (6) afin de fermer en partie le flux d'air pour le diriger vers l'avant, et comprenant un système de verrouillage de position des portes (4), **caractérisé en ce que** le système de verrouillage comporte des verrous (36) prévus pour verrouiller une position d'ouverture intermédiaire des portes (4), entre la position fermée et la position entièrement déployée, où l'actionnement desdits verrous (36) est prévu pour bloquer ladite position intermédiaire d'ouverture des portes (4) sans solliciter lesdits actionneurs des portes (4) pour maintenir cette position.

2. Inverseur de poussée selon la revendication 1, **caractérisé en ce que** le système de verrouillage comporte des cames (20) liées en rotation aux pivots des portes (4), sur lesquelles agissent les verrous (36).

3. Inverseur de poussée selon la revendication 2, **caractérisé en ce que** chaque came (20) comporte une partie extérieure en forme de spirale (22), qui se termine par un décrochement (24) dans lequel vient s'ajuster le verrou (36) pour assurer le blocage de cette came.

4. Inverseur de poussée selon l'une quelconque des revendications précédentes, **caractérisé en ce que** les verrous (36) sont guidés axialement pour coulisser et venir dans la position verrouillée.

5. Inverseur de poussée selon la revendication 4, **caractérisé en ce que** le système de verrouillage comporte deux verrous (36) montés en opposition, qui sont commandés simultanément pour s'écarter l'un de l'autre, et verrouiller chacun une des portes de l'inverseur (4).

6. Inverseur de poussée selon la revendication 5, **caractérisé en ce que** le système de verrouillage comporte des moyens (30) qui en l'absence d'effort d'un actionneur (26) des verrous (36), maintiennent bloquée la position verrouillée de ces verrous pour une force axiale appliquée dessus.

7. Inverseur de poussée selon la revendication 6, **caractérisé en ce que** les moyens comportent deux biellettes (30) commandant chacune un des verrous (36), reliées entre elles par un axe transversal (32), pour la position d'ouverture intermédiaire ces biellettes venant dans une position sensiblement alignée suivant l'axe de ces verrous.

8. Inverseur de poussée selon l'une quelconque des revendications précédentes, **caractérisé en ce que** le système de verrouillage comporte des ressorts (40) appliquant une pression qui tend à mettre les verrous (36) dans la position de verrouillage de la position d'ouverture intermédiaire des portes (4).

9. Inverseur de poussée selon la revendication 7 ou selon les revendications 7 et 8, **caractérisé en ce que** chaque biellette (30) reçoit l'appui permanent d'un ressort (40).

10. Nacelle de turboréacteur disposant d'un inverseur de poussée, **caractérisée en ce que** ce que ledit inverseur de poussée est réalisé selon l'une quelconque des revendications précédentes.

## Patentansprüche

1. Schubumkehr für eine Turbotriebwerksgondel, Türen (4) umfassend, die durch Stellglieder gesteuert werden, die jeweils um ein transversales Drehgelenk (6) schwenken, um den Luftstrom teilweise zu schließen, um ihn nach vorne zu leiten, und ein Verriegelungssystem für die Position der Türen (4) umfassend, **dadurch gekennzeichnet, dass** Verriegelungssystem Riegel (36) umfasst, die vorgesehen sind, um eine Öffnungszwischenposition der Türen (4) zwischen der geschlossenen Position und der vollkommen ausgefahrenen Position zu verriegeln, wo die Betätigung der Riegel (36) vorgesehen ist, um die Öffnungszwischenposition der Türen (4) zu blockieren, ohne die Stellglieder der Türen (4) zu beanspruchen, um diese Position beizubehalten.

2. Schubumkehr nach Anspruch 1, **dadurch gekennzeichnet, dass** das Verriegelungssystem Nocken (20) umfasst, die drehend mit den Drehgelenken der Türen (4) verbunden sind, auf die die Riegel (36) einwirken.

3. Schubumkehr nach Anspruch 2, **dadurch gekennzeichnet, dass** jeder Nocken (20) einen äußeren Abschnitt in Spiralform (22) umfasst, der durch einen Absatz (24) abgeschlossen wird, in den sich der Riegel (36) einpasst, um für die Blockierung dieses Nockens zu sorgen.

4. Schubumkehr nach einem der vorstehenden Ansprüche, **dadurch gekennzeichnet, dass** die Riegel (36) axial geführt werden, um zu gleiten und in die verriegelte Position zu gelangen.

5. Schubumkehr nach Anspruch 4, **dadurch gekennzeichnet, dass** das Verriegelungssystem zwei Riegel (36) umfasst, die einander entgegengesetzt montiert sind, die gleichzeitig gesteuert werden, um sich voneinander zu entfernen und jeweils eine der Türen der Umkehr (4) zu verriegeln.

6. Schubumkehr nach Anspruch 5, **dadurch gekennzeichnet, dass** das Verriegelungssystem Mittel (30) umfasst, die bei nicht vorhandener Beanspruchung eines Stellglieds (26) der Riegel (36) die verriegelte Position dieser Riegel für eine axiale Kraft, die darauf ausgeübt wird, blockiert hält.

7. Schubumkehr nach Anspruch 6, **dadurch gekennzeichnet, dass** die Mittel zwei Schaltgestänge (30), die jeweils einen der Riegel (36) steuern, umfassen, die durch eine transversale Achse (32) miteinander verbunden sind, wobei diese Schaltgestänge für die Öffnungszwischenposition in eine Position gelangen, die im Wesentlichen entlang der Achse dieser Riegel ausgerichtet ist.

8. Schubumkehr nach einem der vorstehenden Ansprüche, **dadurch gekennzeichnet, dass** das Verriegelungssystem Federn (40) umfasst, die einen Druck anlegen, der dazu tendiert, die Riegel (36) in die Verriegelungsposition der Öffnungszwischenposition der Türen (4) zu setzen.

9. Schubumkehr nach Anspruch 7 oder nach den Ansprüchen 7 und 8, **dadurch gekennzeichnet, dass** jedes Schaltgestänge (30) die permanente Anlage einer Feder (40) erhält.

10. Turbotriebwerksgondel, die über eine Schubumkehr verfügt, **dadurch gekennzeichnet, dass** die Schubumkehr nach einem der vorstehenden Ansprüche verwirklicht ist.

## Claims

1. A thrust reverser for a turbojet engine nacelle comprising doors (4) controlled by actuators, each swing about a transverse pivot (6) in order to partially close the air flow to direct it forward, and comprising a system for locking the position of the doors (4), **characterized in that** the locking system comprises locks (36) provided to lock an intermediate opening position of the doors (4), between the closed position and the fully deployed position, where the actuation of said locks (36) is provided to block said intermediate opening position of the doors (4) without requesting from said actuators of the doors (4) to maintain this position.

2. The thrust reverser according to claim 1, **characterized in that** the locking system comprises cams (20) rotatably connected to the pivots of the doors (4), on which the locks (36) act.

3. The thrust reverser according to claim 2, **characterized in that** each cam (20) comprises a spiral-shaped outer portion (22), which ends with a recess (24) in which the lock (36) fits to ensure the blocking of this cam.

4. The thrust reverser according to any one of the preceding claims, **characterized in that** the locks (36) are axially guided to slide and come into the locked position.

5. The thrust reverser according to claim 4, **characterized in that** the locking system comprises two locks (36) mounted in opposition, which are controlled simultaneously to move away from each other, and lock each one of the doors of the thrust reverser (4).

6. The thrust reverser according to claim 5, **characterized in that** the locking system comprises means (30) which, in the absence of force of an actuator (26) of the locks (36), maintain the locked position of these locks blocked for an axial force applied thereon.

7. The thrust reverser according to claim 6, **characterized in that** the means comprise two tie rods (30) each controlling one of the locks (36), interconnected together by a transverse axis (32), for the intermediate opening position of these tie rods coming in a substantially aligned position along the axis of these locks.

8. The thrust reverser according to any one of the preceding claims, **characterized in that** the locking system comprises springs (40) applying a pressure which tends to put the locks (36) in the locking position of the intermediate opening position of the doors (4).

9. The thrust reverser according to claim 7 or according to claims 7 and 8, **characterized in that** each tie rod (30) receives the permanent support of a spring (40).

10. A turbojet engine nacelle having a thrust reverser, **characterized in that** said thrust reverser is made according to any one of the preceding claims.
